# EUROPEAN PATENT SPECIFICATION

(11) **EP 0 489 455 B1**
(45) Date of publication and mention of the grant of the patent: **22.03.1995**
(21) Application number: 91203048.3
(22) Date of filing: 21.11.1991
(51) Int. Cl.: B60B 17/00

(54) **A rail vehicle wheel**
Schienenfahrzeugrad
Roue de véhicule ferroviaire

(30) Priority: 05.12.1990 SE 9003863
(43) Date of publication of application: 10.06.1992
(73) Proprietor: SAB WABCO Holdings B.V., NL-1700 AC Heerhugowaard (NL)
(72) Inventor: Emilsson, Fred Sören, S-231 00 Trelleborg (SE)
(74) Representative: Petri, Stellan

(56) References cited:
- CH-A- 156 916
- CH-A- 320 175
- GB-A- 215 029
- GB-A- 895 520
- US-A- 4 765 382

## Description

### Technical Field

This invention relates to a rail vehicle wheel, comprising a wheel centre, a flanged tyre, and a rubber filling, which is disposed between the wheel centre, the tyre and a pressure ring.

### Background of the Invention

Conventional examples of the above type of rail vehicle wheels are so called V-wheels (shown for example in SE-A-315 915 or CH-A-320 175), in which one or two rubber rings forming a very open V with each other is/are arranged between the wheel centre and the tyre. The angle between each rubber ring and the axis of the wheel may typically be between slightly less than 30° and slightly more than 60°. The rubber rings are primarily exposed to pressure under operation, and the resiliency of the wheel is relatively low. The primary purpose of the wheel is to be sound-dampening. Due to the characteristic of the rubber material the resiliency in the axial direction, where the rubber is exposed to shear, is considerable, which is a drawback.

In another design a number of rubber elements are arranged in circumferential rings between the wheel centre and the tyre and are operating in shear, which provides a good resiliency. A wheel of this design is, however, relatively complicated and expensive, especially if high loads are to be handled.

GB-A-895 520 shows a rail vehicle wheel according to the preamble of claim 1. The rail vehicle wheel comprises a wheel centre, a flanged tyre and a rubber filling in a generally U-shaped, annular compartment between the wheel centre, the tyre and a pressure ring, which ring is mounted to a side of the wheel centre for holding the rubber ring in position. The rubber filling consists of two separate, substantially Z-formed rings being under pressure when mounted.

Generally speaking, the object of the invention is to accomplish a wheel having the simple and comparatively cheap design of the conventional V-wheel but having a greater resiliency in the radial direction (and better stiffness in the axial direction). It is also imperative that a new wheel has the ability to carry great loads.

All of the above objectives cannot be reached in the already known way of increasing the angle between each rubber ring and the wheel axis, so that the ring is more exposed to shear than to pressure under operation. Not even by combining the two rubber rings into one and increasing the angle as above stated it is possible to reach the objectives.

### The Invention

The object of the invention is achieved by the subject-matter as defined in claim 1.

In order to attain all of the desired objectives, a rubber filling in a wheel of the above stated kind consists of a rubber ring having an annular, axial body, which does not completely fill the space afforded to it in the compartment, and, integrally with the axial body, at each side thereof a thinner flange, which forms an obtuse angle, preferably of 60°, with the wheel axis, and in that the rubber ring is slightly prestressed when mounted.

The rubber ring flanges - by being exposed at operation to a combination of shear (to a larger extent) and pressure (to a lesser extent) - will give the wheel a resiliency of for example 0.5 - 1 mm or more but also a satisfactory stiffness in the axial direction. If the wheel is exposed to higher loads, the annular body will be exposed to pressure giving the wheel a progressive spring characteristic. In the conventional V-wheel the rubber rings are virtually only active in the vicinity of the contact point between the wheel and the rail, whereas in the present design the rubber flanges will be active practically around the whole wheel at rotation.

In the conventional V-wheel the screw joints attaching the pressure ring to the wheel centre and thus keeping all parts together are placed radially inside the rubber rings. Also in the present design the pressure ring is attached to the wheel centre by a number of screw joints evenly distributed around the wheel, but here the screw of each screw joint extends through a hole in the annular body of the rubber ring, whereby a two-fold purpose is accomplished: undesired circumferential movements of the rubber ring are prevented and a very space-effective design is obtained.

A further security against undesired mutual movements between rubber and metal (slip and creep) also in radial direction is according to the invention obtained in that surfaces of the wheel centre, tyre and/or pressure ring intended to cooperate with the rubber ring flanges are provided with annular grooves.

A further feature of the wheel according to the invention is that the substantially axial surface of the wheel centre in contact with the annular body of the rubber ring is slightly tapered. In this way a certain compensation for the axial force from the contact of the wheel flange with the rail on which the wheel rolls is obtained and also a guiding for the rubber ring at the mounting.

### Brief Description of the Drawing

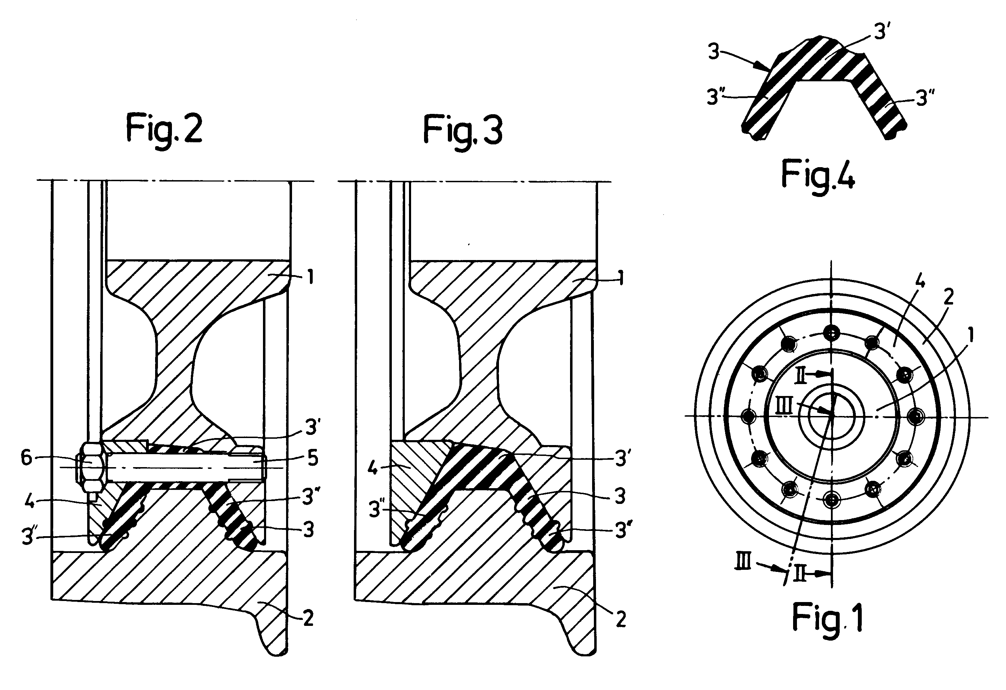

The invention will be described in further detail below reference being made to the accompanying drawing, in which Fig. 1 is a side view of a wheel according to the invention, Figs. 2 and 3 are cross-sectional views (to a larger scale) through this wheel along the lines II-II and III-III in Fig. 1, and Fig. 4 is a corresponding cross-sectional view through a rubber ring before mounting.

### Detailed Description of a Preferred Embodiment

A rail vehicle wheel according to the invention consists primarily of a wheel centre 1, a flanged tyre 2, a rubber ring 3, and a pressure ring 4.

The rubber ring 3 has a substantial annular body 3', from which two thinner flanges 3'' extend towards the wheel tread (when fitted).

The pressure ring 4, which has a press fit in relation to the wheel centre 1, is mounted to the wheel centre by means of screw joints, preferably evenly distributed around the wheel as shown in Fig. 1. Each screw joint consists of a stud or screw 5, which is initially securely fastened to the wheel centre 1, and a nut 6. The stud 5, which extends through the annular body 3' of the rubber ring 3, is comparatively slender, and the engagement between the nut 6 and the pressure ring 4 is over conical surfaces; these factors enhance flexibility and decrease the requirement on fine tolerances.

As appears from Figs. 2 and 3, there are annular grooves in the metal surfaces of the wheel centre 1, the tyre 2 and the pressure ring 4 in contact with the rubber ring 3, whereas the corresponding surfaces of the rubber ring are even, as appears in Fig. 4, which shows the rubber ring before mounting. At mounting, the rubber will be pressed into these grooves increasing the contact surface between rubber and metal, so that mutual slip and creep will be diminished.

It also appears from Fig. 4 that the annular body 3' of the rubber ring 3 may have annular recesses, so that even after the compression occurring at mounting, which may be in the region of 10-20 %, the space provided by the metal parts in this region is not completely filled with rubber. Likewise the diameter of the studs 5 is less than the diameter of the corresponding holes in the rubber ring 3. In this way a pressure increase in this area is obviated.

Rubber has the ability to withstand twice as high forces under pressure as under shear. By choosing the angle between the wheel axis and each rubber flange 3'' at 60°, the geometry automatically leads to maximum twice as high forces in the annular body 3' exposed to pressure as in the flanges 3'' exposed to shear.

By the geometry of the rubber ring 3 having a rather wide annular body 3', the tyre 2 has a big cross-sectional area inside the flanges 3'', so that the tyre - even after substantial wear - has great strength and stiffness with increased safety and advantageous pressure distribution in the rubber as result.

The mounting of the wheel is simple: the rubber ring 3 is first mounted on the tyre 2, whereupon the assembly is placed on the wheel centre 1 with the pre-mounted studs 5 extending through the holes in the rubber ring 3, and as the last step the pressure ring 4 is mounted and attached (to contact against an abutment in the wheel centre 1) by the nuts 6, so that the desired prestress in the rubber is obtained and rubber material is pressed into the grooves in the metal parts. In the shown case there are three grooves at the inner side of each rubber ring flange 3'' and one at the outer side; these numbers may vary.

The rubber ring 3 is completely symmetrical before mounting, as appears from Fig. 4. However, it appears from Figs. 2 and 3 that the substantially axial surface of the wheel centre 1 in contact with the annular body 3' of the rubber ring 3 has a certain inclination or taper, which has the twofold purpose of simplifying the mounting (by accomplishing a guiding) and providing a certain lateral force compensation for the lateral force emanating from the cooperation between the wheel flange (on the tyre 2) and the rail on which the wheel runs.

By the fact that the studs 5 extend through the rubber ring 3, the latter will effectively be prevented from undesired rotational movements, while at the same time a very space-effective design is obtained. An even improved safety against rotational movements may be attained by initially cementing the rubber ring 3 to the tyre 2.

In a conventional V-wheel design, where two rubber rings are arranged between a wheel centre and a tyre in a V-configuration and where the angle that each ring forms with the wheel axis is much smaller than in the present design, say 30° or less, the rubber is primarily exposed to pressure, which gives the wheel only a small resiliency in the radial direction and greater and undesired resiliency in the axial direction, where the rubber is more exposed to shear.

In the present design only the rubber in the rubber ring flanges 3'' is active in normal operation of the wheel, as the annular body 3' does not completely fill the space afforded to it. Due to the fact that the rubber in the flanges 3'' mainly operates in shear, where the material is more resilient, a greater elasticity in the radial direction is obtained than in the conventional design and a greater stiffness in the axial direction. Only when the wheel is exposed to greater loads, the rubber ring body 3' will start to cooperate more actively under pressure and give the wheel a progressive spring characteristic.

In the conventional V-wheel design, the rubber rings are compressed only in the vicinity of the contact point between the wheel and the rail and are practically idling during the remainder of each rotational turn, whereas in the present design the shear forces act (in different directions) on practically the whole rubber flanges 3'', which leads to a more even distribution of the loads and stresses.

In the shown and described design the rubber flanges 3'' are directed towards the tyre 2; the rubber ring may also be arranged with the flanges directed towards the wheel centre.

## Claims

1. A rail vehicle wheel, comprising a wheel centre (1), a flanged tyre (2) and a rubber filling (3) in a generally U-shaped, annular compartment between the wheel centre, the tyre (2) and a pressure ring (4) which ring is mounted to a side of the wheel centre (1) for holding the rubber filling (3) in position, **characterized** in that the rubber filling consists of a rubber ring (3) having an annular, axial body (3'), which does not completely fill the space afforded to it in the compartment, and, integrally with the axial body (3'), at each side thereof a thinner flange (3''), which forms an obtuse angle, preferably of 60°, with the wheel axis, and in that the rubber ring (3) is slightly prestressed when mounted.

2. A wheel according to claim 1, where the pressure ring (4) is attached to the wheel centre (1) by a number of screw joints (5, 6) evenly distributed around the wheel, **characterized** in that a screw (5) of each screw joint (5, 6) extends through a hole in the annular body (3') of the rubber ring (3).

3. A wheel according to claim 1 or 2, **characterized** in that surfaces of the wheel centre (1), tyre (2) and/or pressure ring (4) intended to cooperate with the rubber ring flanges (3'') are provided with annular grooves.

4. A wheel according to any of the preceding claims, **characterized** in that the substantially axial surface of the wheel centre (1) in contact with the annular body (3') of the rubber ring (3) is slightly tapered.

## Patentansprüche

1. Schienenfahrzeugrad mit einem Radmittelteil (1), einem mit Flansch versehenen Laufkranz (2) und einer Gummifüllung (3) in einem im allgemeinen U-förmigen, ringförmigen Zwischenraum zwischen dem Radmittelteil, dem Laufkranz (2) und einem Druckring (4), der an einer Seite des Radmittelteils (1) zum Halten der Gummifüllung (3) in ihrer Stellung angebracht ist,
**dadurch gekennzeichnet,**
daß die Gummifüllung aus einem Gummiring (3) mit einem ringförmigen, axialen Körper (3'), der den ihm zur Verfügung stehenden Raum in dem Zwischenraum nicht vollständig ausfüllt, und auf jeder Seite davon aus einem dünneren Flansch (3'') besteht, der integral mit dem axialen Körper (3') verbunden ist und einen stumpfen Winkel von vorzugsweise 60° mit der Radachse bildet, und daß der Gummiring (3) bei der Montage leicht vorgespannt wird.

2. Rad nach Anspruch 1, wobei der Druckring (4) durch eine Anzahl von Schraubenverbindungen (5,6), die gleichmäßig verteilt um das Rad angeordnet sind, an dem Radmittelteil (1) angebracht ist,
**dadurch gekennzeichnet,**
daß ein Schraubenbolzen (5) jeder Schraubenverbindung (5,6) sich durch eine Bohrung in dem ringförmigen Körper (3') des Gummirings (3) erstreckt.

3. Rad nach Anspruch 1 oder 2,
**dadurch gekennzeichnet,**
daß die Oberflächen des Radmittelteils (1), des Laufkranzes (2) und/oder des Druckrings (4), die mit den Flanschen (3'') des Gummiringes zusammenwirken, mit Ringnuten versehen sind.

4. Rad nach einem der vorhergehenden Ansprüche,
**dadurch gekennzeichnet,**
daß die im wesentlichen axiale Fläche des Radmittelteils (1), die mit dem Ringkörper (3') des Gummirings (3) in Berührung steht, leicht abgeschrägt ist.

## Revendications

1. Roue de véhicule sur rails, comportant un centre (1) de roue, un bandage (2) à boudin et une garniture (3) de caoutchouc dans un compartiment annulaire de forme générale en U entre le centre de roue, le bandage (2) et un anneau (4) de pression, lequel anneau est monté sur un côté du centre (1) de roue pour maintenir la garniture (3) de caoutchouc en position, caractérisée en ce que la garniture de caoutchouc consiste en un anneau (3) de caoutchouc ayant un corps axial annulaire (3'), qui ne remplit pas complètement l'espace qui lui est offert dans le compartiment, et, d'une seule pièce avec le corps axial (3') sur chacun de ses côtés, une aile (3'') plus mince qui forme un angle obtus, avantageusement de 60°, avec l'axe de la roue, et en ce que l'anneau (3) de caoutchouc est légèrement précontraint lorsqu'il est monté.

2. Roue selon la revendication 1, dans laquelle l'anneau (4) de pression est monté sur le centre (1) de roue par un certain nombre d'assemblages à vis (5, 6) répartis régulièrement autour de la roue, caractérisée en ce qu'une vis (5) de chaque assemblage à vis (5, 6) passe dans un trou du corps annulaire (3') de l'anneau (3) de caoutchouc.

3. Roue selon la revendication 1 ou 2, caractérisée en ce que des surfaces du centre (1) de roue, du bandage (2) et/ou de l'anneau (4) de pression destinées à coopérer avec les ailes (3'') de l'anneau de caoutchouc sont pourvues de gorges annulaires.

4. Roue selon l'une quelconque des revendications précédentes, caractérisée en ce que la surface sensiblement axiale du centre (1) de la roue en contact avec le corps annulaire (3') de l'anneau (3) de caoutchouc est légèrement conique.
